# EUROPEAN PATENT SPECIFICATION

(11) **EP 0 879 729 B1**
(45) Date of publication and mention of the grant of the patent: **02.04.2003**
(21) Application number: 98201637.0
(22) Date of filing: 16.05.1998
(51) Int. Cl.: F16H 59/06, B60K 23/00

(54) **Self-centering and dampening hydrostatic transmission linkage.**
Selbstzentrierendes und dämpfendes Koppelelement für hydrostatisches Getriebe
Liaison autocentreuse et amortissante pour transmission hydrostatique

(30) Priority: 21.05.1997 US 47240 P
(43) Date of publication of application: 25.11.1998
(73) Proprietor: CNH U.K. LIMITED, Basildon, Essex SS14 3AD (GB)
(72) Inventor: Leeds, Darryl T., Wrightsville, PA 17368 (US); Whitenight, Russell D., Ephrata, PA 17522 (US); Braine, Jack K., Mohnton, PA 19540 (US); Kern, Randall D., New Holland, PA 17557 (US)
(74) Representative: Vandenbroucke, Alberic

(56) References cited:
- US-A- 3 952 512
- US-A- 4 040 306
- US-A- 4 759 417
- US-A- 5 216 935
- US-A- 5 263 385
- US-A- 5 509 496

## Description

This invention relates to an improvement of a hydrostatic transmission of an automotive vehicle, such as an agricultural tractor.

Agricultural tractors have been used for a variety of farming operations for decades and as they have become more and more versatile, they are now being employed for a even a greater number of agricultural tasks. More recently, the use of a hydrostatic transmission has become popular to propel the farm tractor since a hydrostatic transmission is simpler to operate than a conventional mechanical transmission. Instead of having to constantly depress a clutch pedal and to manually effect gear shifts, a hydrostatic transmission can be operated simply by depressing a pedal which controls a hydrostatic pump, which in turn controls a hydrostatic motor.

However, one of the problems with a hydrostatic transmission is the risk that the operator will inadvertently leave the pedal slightly depressed and exit the tractor. The slightest movement of the pedal will result in the tractor 'creeping' in the forward or rearward direction thereby possibly injuring an individual. Another inconvenience with the hydrostatic transmission involves the use of two pedals to control the motion of the tractor. Typically, there is a pedal for forward motion and a separate pedal for rearward motion. For some farm operations, such as those requiring a bucket or lift, an operator may be changing directions frequently. It will be appreciated that the constant alternating between the forward and reverse pedal is tiring to an operator.

The prior art illustrates these and additional difficulties. US-A-4.759.417 discloses a system and method for controlling the ground speed and enhancing the manoeuvrability of an off-road vehicle. This patent uses two pedals to control the speed and direction of the tractor. To prevent the tractor transmission from inadvertently remaining engaged, a complex series of springs are operable to maintain the tractor transmission in neutral. Because the transmission is sensitive to the slightest pedal depression, a grooved cam is used to keep the transmission in precise adjustment. This design also results in the pedal quickly returning to neutral when the pedal is no longer depressed consequently effecting an abrupt stop causing the operator some discomfort. The quick motion of the pedal can also create a harmonic vibration which can potentially damage various tractor components. It is also necessary to dampen the motion of the pedal to limit the vibration caused by the tractor engine. This results in additional springs and rods adding cost and complexity to this design.

Consequently, the need exists for a self-centering hydrostatic transmission linkage which minimizes the number of parts and complexity of the transmission system. It would also be advantageous having a single pedal which can control the motion of an agricultural tractor.

A single pedal control for a stepless transmission is shown in US-A-5.263.385. A vibration damping ring with a large mass is connected directly to the pedal whereas a separate neutralising mechanism for returning the pedal to a neutral position is provided at a location remote from the pedal. This requires a complex linkage to couple the pedal to the neutralising mechanism.

It is therefore an object of the present invention to provide a self-centering and dampening hydrostatic transmission linkage in which the functions of centering and dampening are integrated in a single element.

According to the present invention, a vehicle is provided having a hydrostatic transmission controlled by a single control pedal for selectively choosing forward or rearward motion of the vehicle; said pedal having a damper associated therewith for dampening vibrations transmitted from the vehicle to the pedal and a detent mechanism for releasably maintaining the pedal in a neutral position, whereby the vehicle is kept immobile.

The vehicle is characterized in that said damper further is operable to center the pedal in said neutral position when not depressed.

Preferably, as well the damper as the detent mechanism are adjustably connected to the chassis of the vehicle. The control pedal is balanced such that the center of gravity thereof substantially coincides with the pivot of said pedal. The damper is operable to automatically place the tractor's transmission into neutral and simultaneously dampen vibrations from the transmission.

The advantages of this invention will be apparent upon consideration of the following detailed disclosure of the invention, especially when taken in conjunction with the accompanying drawings wherein:
Figure 1 is a general view of an agricultural tractor;
Figure 2 is a side elevational view of the present invention;
Figure 3 is a side-rear elevational view of the present invention showing the centering damper and pivot link;
Figure 4 is a side view of the present invention showing the hydrostatic transmission system pedal and pivot link in the neutral position;
Figure 5 is a side view of the present invention showing the hydrostatic transmission system pedal and pivot link in the reverse position;
Figure 6 is a side view of the present invention showing the hydrostatic transmission system pedal and pivot link in the forward position;

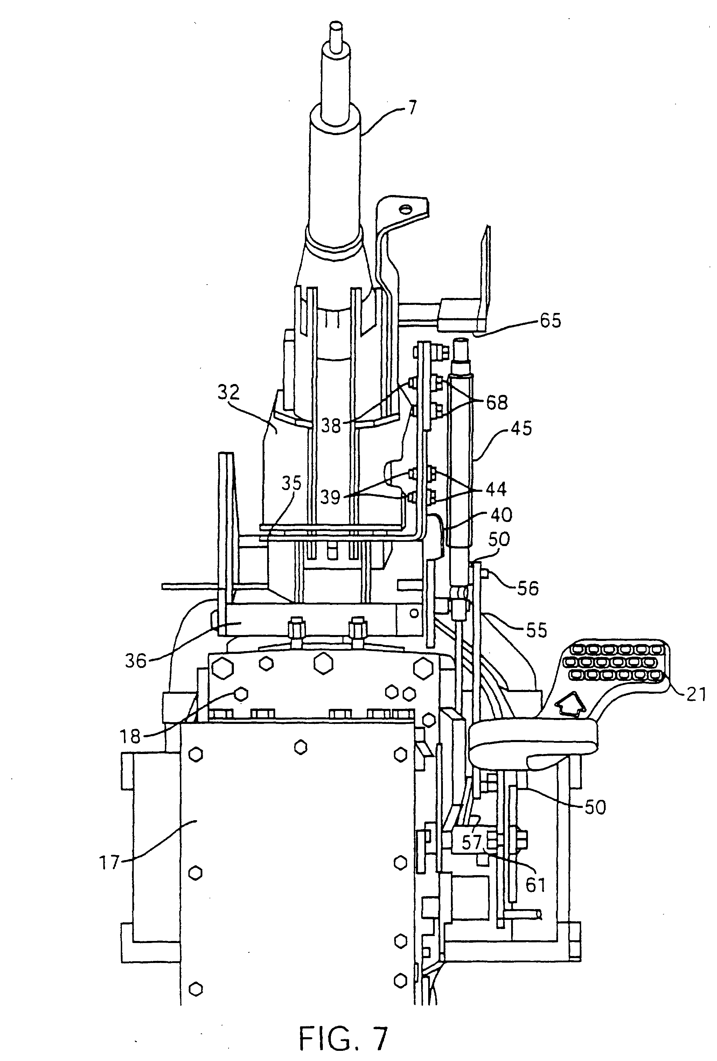

Figure 7 is a rear view of the present invention;
Figure 8A is an overhead view of the hydrostatic transmission system pedal of the present invention;
Figure 8B is a side view of the hydrostatic transmission system pedal of the present invention;
Figure 8C shows the bottom view of the hydrostatic transmission system pedal of the present invention;
Figure 9 shows a side view of the isolator plate of the present invention;
Figure 10 shows a side view of the adjustable spring steel detent of the present invention; and
Figure 11 shows a side view of the neutral adjust mount of the present invention.

Referring to the drawings, it is possible to observe the major elements and general operation of the present invention. Left and right references are used as a matter of convenience and are determined by standing at the rear of the tractor and facing the forward end in the normal direction of travel. Likewise, forward and rearward are determined by normal direction of travel of the tractor. Upward or downward orientations are relative to the ground or operating surface. Horizontal or vertical planes are also relative to the ground.

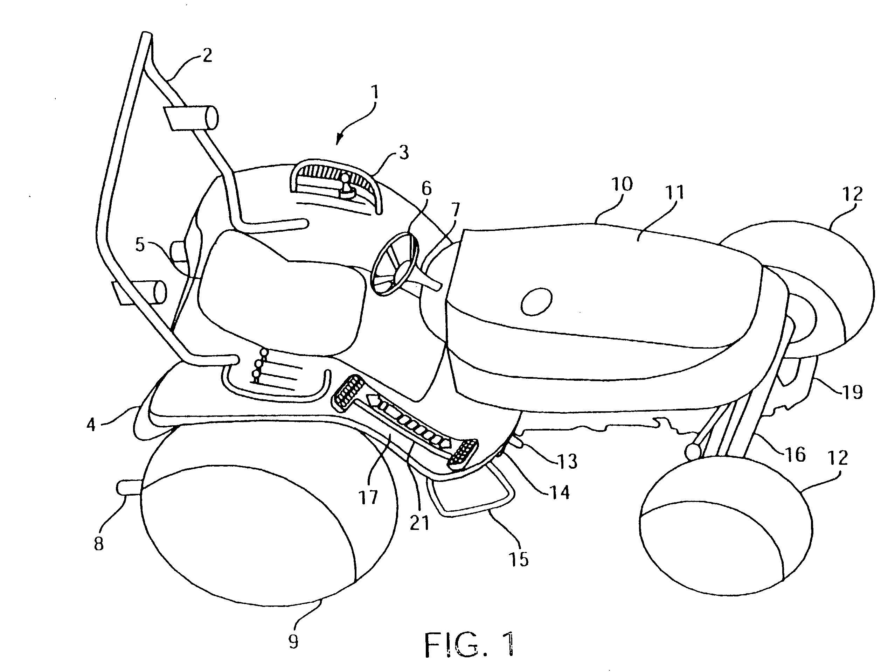

Figure 1 illustrates a conventional agricultural tractor containing the present invention. A typical farm tractor 1 has a pair of front wheels 12 and a pair of rear wheels 9 (only one shown) for movement and the support of the chassis of the tractor. There is an engine compartment 11 for supplying power to the tractor as well as a fuel tank 10. An operator's platform 14, containing an operator's chair 5, is reached by a platform step 15. From the operator's chair 5, the operator can observe and control a variety of farming operations. A steering wheel 6 supported by a steering column 7 is located in front of the operator's chair 5. There are a set of left-hand controls 3 and right-hand controls 4 for controlling the hitch 8, power-take-off (PTO) (not shown) and various other agricultural systems. A brake 13 is equally located on the operator's platform 14. The transmission housing 17 contains the transmission (not shown) which provides power to the rear wheels 9 and optionally also to the front wheels 12. The transmission is controlled by a hydrostatic transmission control pedal (hydro pedal) 21, which is depressed by the operator to control the speed and direction of the tractor. The operator is protected by a roll over protection bar 2, which in many tractors is incorporated into an enclosed cab structure. Besides a rear hitch 8, many tractors have a front mount 19 so that front mounted implements can be installed. The present invention focuses on the region of the tractor containing the hydro pedal 21 and the transmission housing 17.

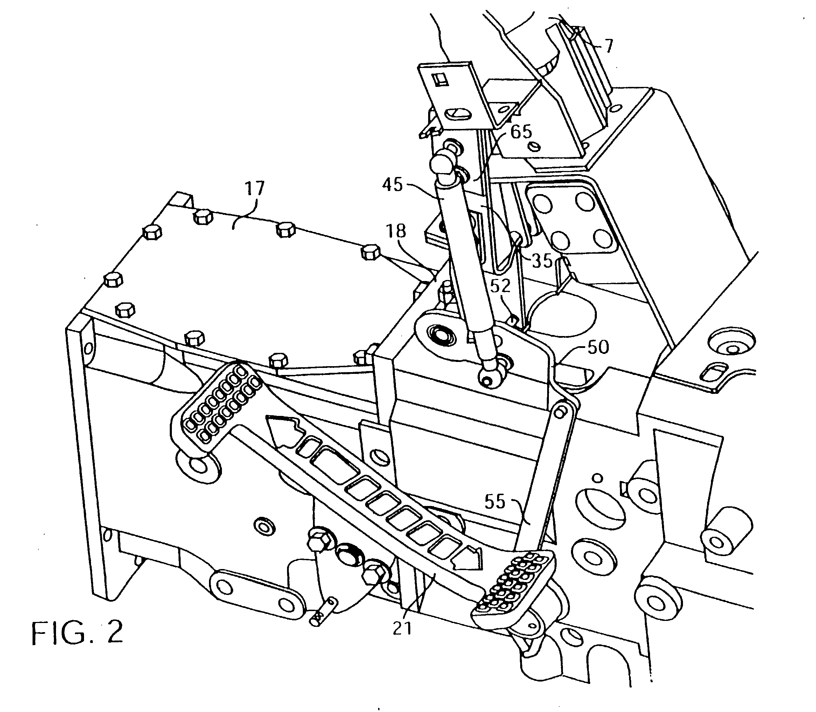

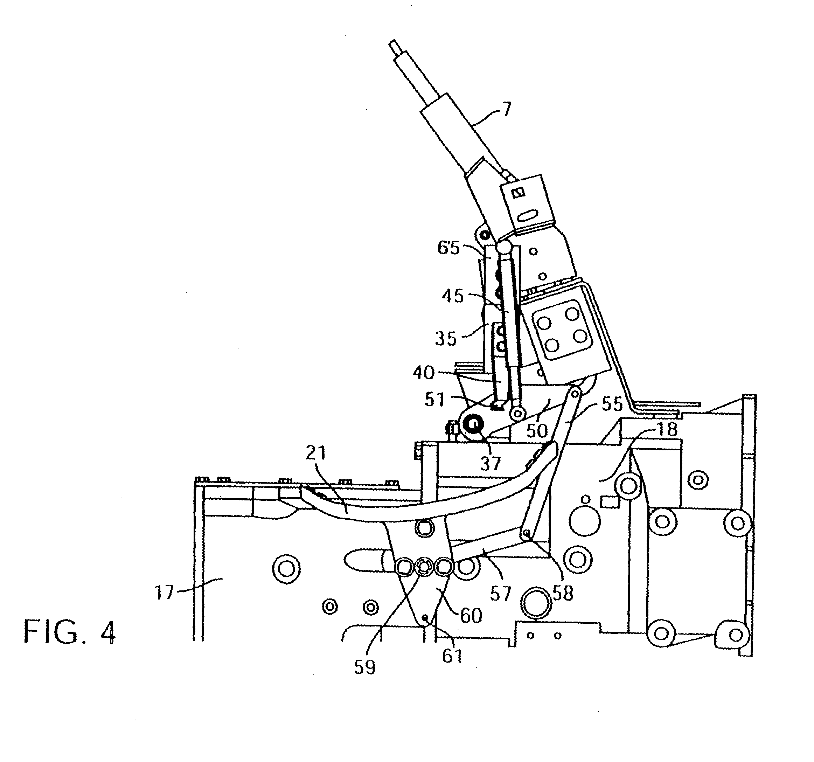

Figure 2 illustrates the general elements of the present invention. With the exception of the hydro pedal 21, the invention is covered by the operator's platform 14 and is located proximate to the transmission housing 17. Generally, the invention comprises an isolator plate 35 with a pivot link 50 pivotally attached thereto. In addition, a centering damper 45 is provided inbetween the isolator plate 35 and the pivot link 50. Also affixed to the pivot link 50 is the hydraulic transmission adjustment rod 52, which enters a clutch housing 18 for controlling the speed and direction of the transmission by operating on a hydrostatic pump (not shown). An upper rocker arm 55 and lower rocker arm 57 (see figure 4) connect the pivot link 50 to the hydro pedal 21. By depressing the hydro pedal 21, the pivot link 50 is pivoted thereby in-turn acting on the rod 52 to adjust the direction and speed of the tractor's transmission.

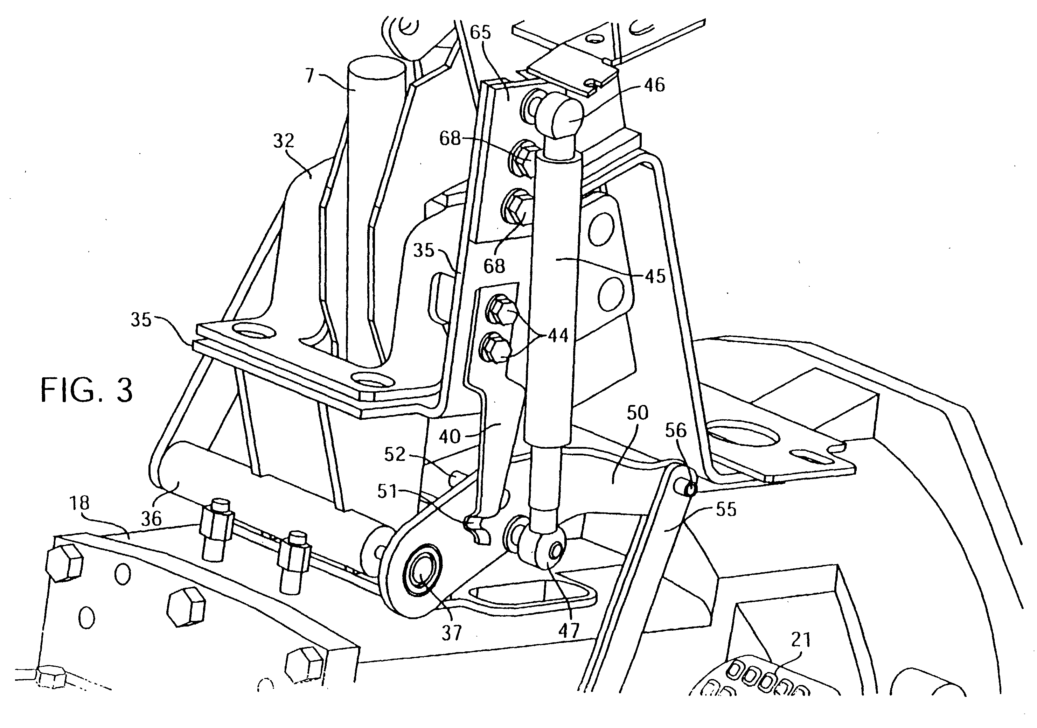

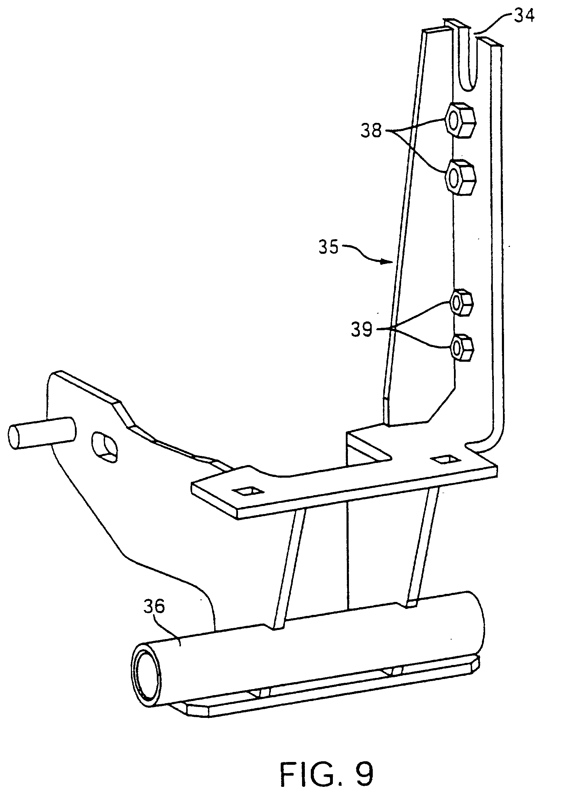

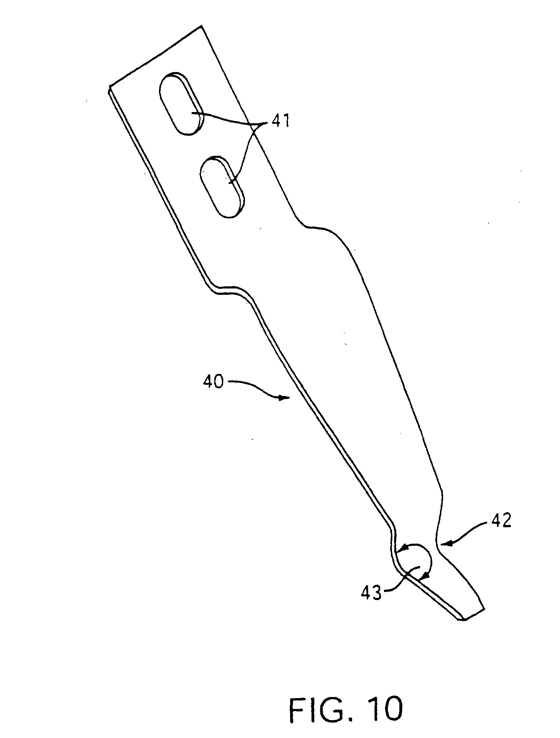

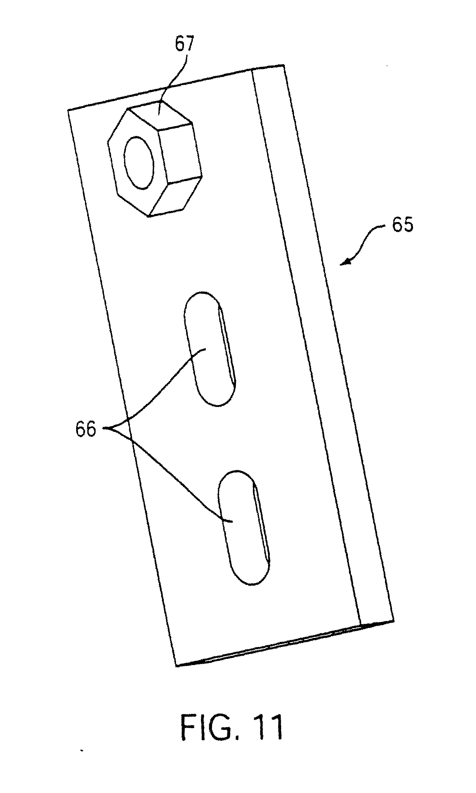

Now that the general elements of the invention have been reviewed, reference is made to Figures 3, 9, 10 and 11 providing a good overview of the isolator plate 35 and its various elements. The isolator plate 35 is situated above the clutch housing 18 and beneath the steering column support plate 32. It has a shaft tube 36 which supports the pivot link 50 at the shaft tube pivot 37. As best seen in figure 9, the isolator plate further has a pair of detent attach nuts 39, a pair of neutral adjust nuts 38 and an upper rod attach slot 34. The adjust nuts 38 and detent nuts 39 may be pre-welded before attaching the remainder of the invention. The adjust nuts 38 and attach nuts 39 are oriented on a vertical line so as to facilitate adjustment and assembly of the remainder of the invention. A neutral adjust mount 65, shown in detail in Figure 11 and in assembled condition in figure 3, is attached to the side of the isolator plate 35 facing away from the neutral adjust nuts 38. The mount 65 has a pair of mount slots 66 which coincide with the adjust nuts 38. A pair of neutral adjust bolts 68 are inserted through the mount slots 66 and into the adjust nuts 38. The mount slots 66 allow for easy adjustment of the centering damper 45. Also on the neutral adjust mount 65 is an upper rod nut 67. As best seen in Figure 3, located beneath the neutral adjust mount 65 is the adjustable spring steel detent 40. Like the neutral adjust mount 65, the detent 40 has a pair of detent slots 41, shown in Figure 10. These slots 41 receive a pair of detent attach bolts 44 which are inserted into the detent attach nuts 39. The detent slots 41 allow for easy adjustment of the detent 40. The detent 40 has a 'V' shaped clip 42 which consists of a pair of perpendicularly oriented walls 43.

As previously indicated, the pivot link 50 is pivotally connected to the shaft tube 36 at the shaft tube pivot 37. Also attached to the pivot link 50 is the hydrostatic transmission adjustment rod 52. The pivot link 50 comprises an aperture 51 for receiving the V clip 42 of the detent 40. The upper rocker arm 55 is pivotally affixed at one end to the pivot link 50 by the upper rocker pivot 56 and at the other end to the lower rocker arm 57 by a lower rocker pivot 58.

As already mentioned, the centering damper 45 is pivotally attached at one end to the neutral adjustment mount 65 and at the other end to the pivot link 50. The upper rod end 46 of the centering damper 45 is pivotally affixed into the upper rod nut 67 of the neutral adjustment mount, which can be accessed through the upper rod attach slot 34 in the isolator plate 35. The lower rod end 47, located at the opposite end of the centering damper 45, is pivotally affixed to the pivot link 50. In the preferred embodiment, the centering damper 45 is a combination gas spring and damper such as model no. XP 3558 manufactured by AVM Inc. of Marion, South Carolina. The centering damper 45 has the characteristic to return to a pre-set position upon removing the force on the damper regardless of a previous position taken up under load.

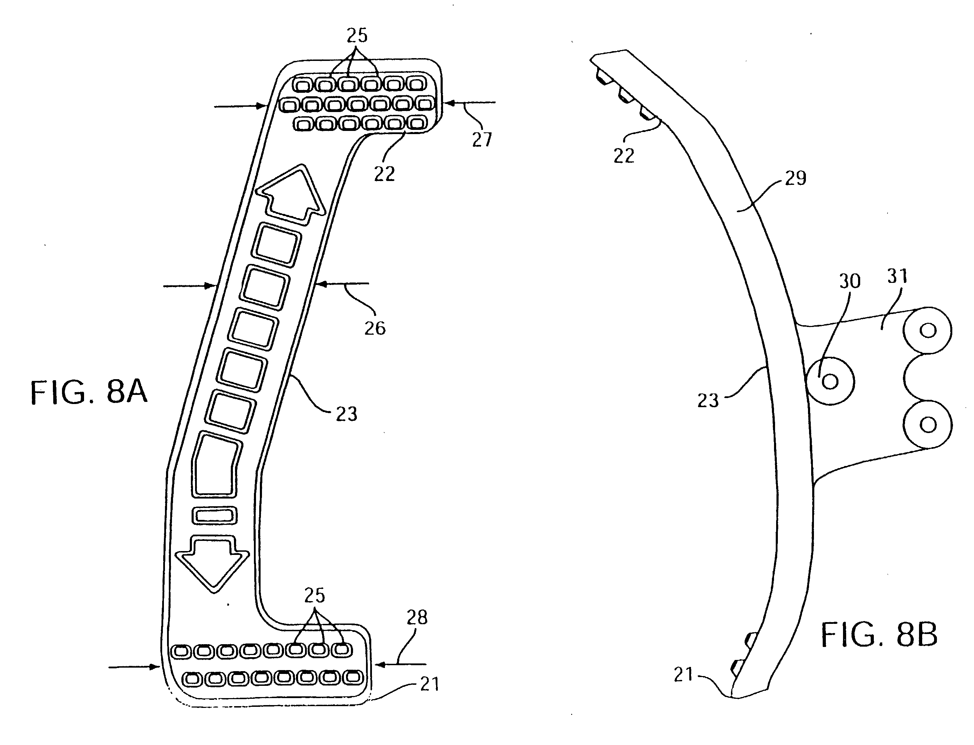

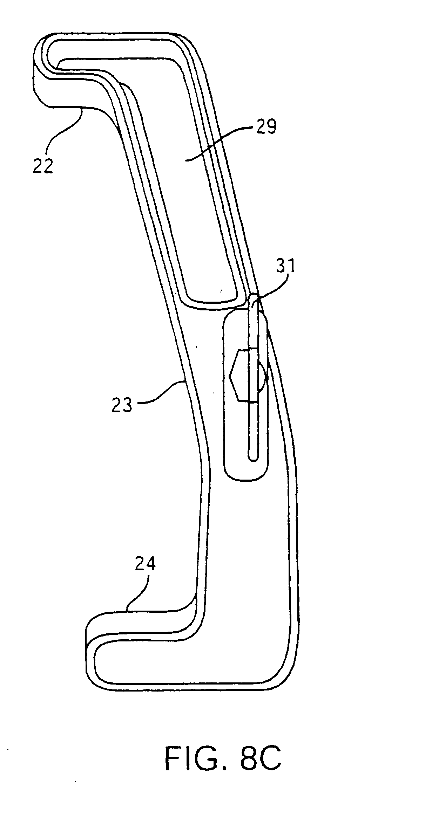

The hydrostatic transmission system control pedal 21 (hydro pedal) is attached to the lower rocker arm 57 and is supported by a pedal mount 31 shown in Figure 8B and 8C. The pedal mount 31 is attached to a pedal support bracket 60 which in turn is pivotally attached to a support pivot 61, attached to the transmission housing 17. The lower rocker arm 57 is affixed to the pedal support bracket 60 at a lower rocker attach 59 which is positioned mid way between the support pivot 61 and the hydro pedal 21. The surface of the hydro pedal 21 comprises a narrow curved foot rest 23 best observed in Figures 8A and 8B. An elongated forward pad 22 and an elongated rearward pad 24 are transversely located at the opposed ends of the foot rest 23. Each pad is covered with several anti-slip threads 25. It should be noted that the widths 27 and 28 of the elongated forward and rearward pads 22 and 24 are approximately twice as wide as the width 26 of the foot rest 23. This design allows for an operator to rest his foot on the foot rest 23 and control the direction and speed of the tractor merely by either pressing down on the front of the foot rest 23 or the rear of the foot rest 23. In the alternative, an operator could rest his foot on the operator's platform 14 immediately beside the foot rest 23 and could control the motion of the tractor by raising his foot to depress the elongated forward pad 22 or by raising his heel to depress the elongated rearward pad 24. In this manner the operator would avoid contacting the foot rest 23. This alternative method is especially useful when the tractor is constantly changing drive direction such as during operations involving a loader bucket or lift.

The hydro pedal 21 has a center of gravity 30 to ensure that the pedal is maintained in a proper position. A hollowed region 29, as seen in figures 8B and 8C, beneath the elongated forward pad 22 and the forward portion of the foot rest 23 ensures that the center of gravity 30 is positioned above the support pivot 61 and lower rocker attach 59.

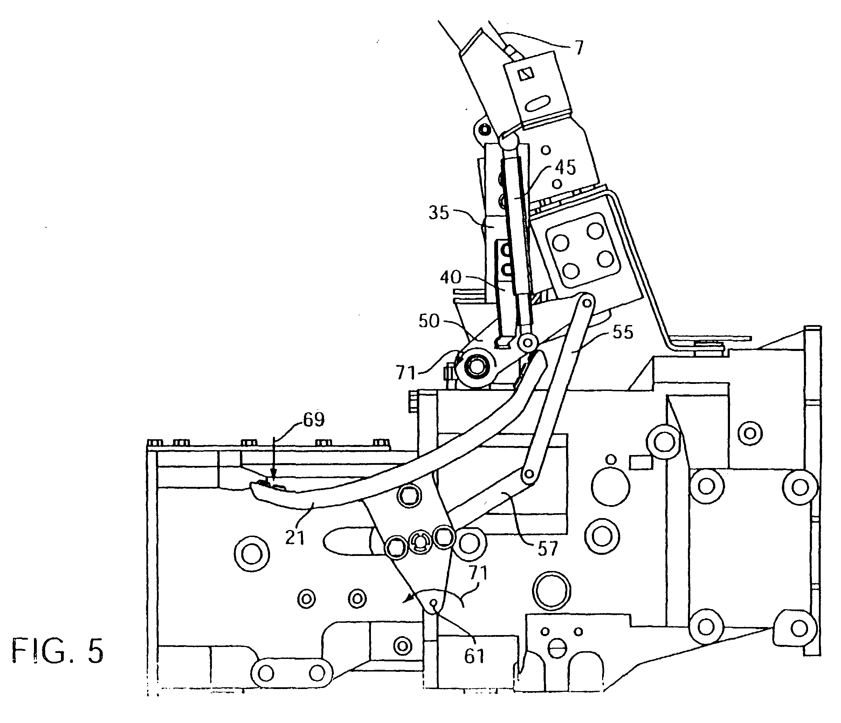

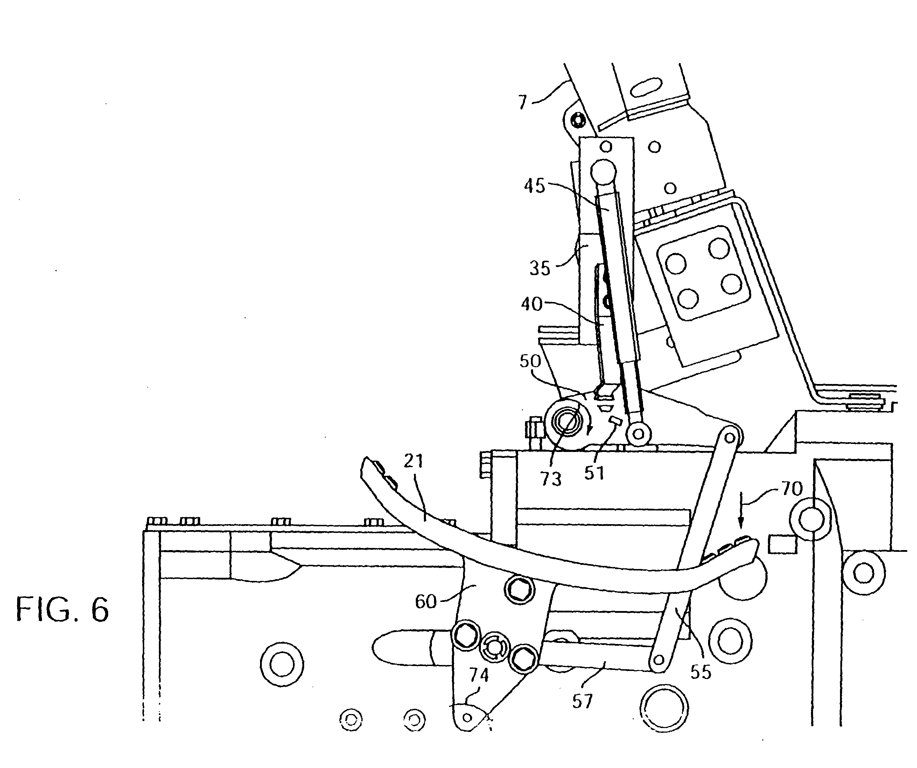

When, in operation, a downward force 69 is exerted on the elongated rearward pad 24, as best seen in figure 5, then the hydro pedal 21 and pedal support bracket 60 are rotated in a counter clock-wise motion 71 moving the lower rocker arm 57 and upper rocker arm 55 thereby rotating the pivot link 50 counter clock-wise in the direction of arrow 71'. This movement of the pivot link 50 rotates the rod 52 whereby the tractor is propelled in a rearward direction. Conversely, when a downward force 70, as best seen in Figure 6, is exerted on the elongated forward pad 22, then the hydro pedal 21 and pedal support bracket 60 are rotated in a clock-wise motion 74 moving the lower rocker arm 57 and upper rocker arm 55, thereby rotating the pivot link 50 clock-wise in the direction of arrow 73. This movement of the pivot link 50 moves the rod 52 in such a manner as to propel the tractor in a forward direction. It will be appreciated that any movement of the pivot link 50 away from its neutral position will release the V clip 42 from the associated aperture 51.

When no force is exerted on the hydro pedal 21, as best seen in figure 4, the centering damper 45 rotates the pivot link until the V clip 42 of the detent 40 contacts and is inserted into the aperture 51. The sides of the V clip 42 exert sufficient force to hold the pivot link in its neutral position. This is needed because a movement of only 0.5 millimeters from neutral of the rod 52 will allow for the transmission to engage and the tractor to move or creep, what of course would create a potential hazard. To enable the precise setting of the pivot link 50 in the neutral position, the detent slots 41 in the detent 40 and the mount slots 66 in the neutral adjust mount 65 allow for the precise adjustment of the detent 40 and the damper 45.

To install the present invention, first the detent 40 is loosely attached to the isolator plate 35 whereafter the adjust mount 65 is also attached thereto. Finally, the centering damper 45 is connected to the pivot link 50 and to the adjust mount 65. To adjust the linkage, the engine is engaged to full throttle and the pivot link 50 is set to the neutral position. Subsequently, the V clip 42 is inserted into the aperture 51 of the pivot link whereafter the detent 40 is tightened. Finally, the neutral adjust bolts 68 of the damper 45 are tightened.

It will be appreciated by those skilled in the art that various changes may be made to the present invention without departing from the scope of the claims.

## Claims

1. A vehicle having a hydrostatic transmission controlled by a single control pedal (21) for selectively choosing forward or rearward motion of the vehicle; said pedal (21) having a damper (45) associated therewith for dampening vibrations transmitted from the vehicle to the pedal (21) and a detent mechanism (40, 51) for releasably maintaining the pedal (21) in a neutral position, whereby the vehicle is kept immobile; and
**characterized in that** said damper (45) further is operating to center the pedal (21) in said neutral position when not depressed.

2. A vehicle according to claim 1, **characterized in that** said pedal (21) is pivotally attached to the vehicle chassis and is operably connected to the hydrostatic transmission through a linkage; said linkage comprising :
- a pivot link (50) pivotally attached to a chassis plate (35);
- a transmission adjustment rod (52) connected at one end to said pivot link (50) and inserted at the other end into a transmission housing (17) for controlling the direction and the speed of the vehicle; and
- a rocker arm arrangement (55, 57) operably connecting said pedal (21) with said pivot link (50).

3. A vehicle according to claim 2 **characterized in that** said damper (45) is arranged inbetween said chassis plate (35) and said pivot link (50).

4. A vehicle according to claims 2 or 3 **characterized in that** said detent mechanism (40, 51) includes a spring steel detent (40) connected at one end to said chassis plate (35) and having a V clip (42) at its other end engageable with an aperture (51) in said pivot link (50) to releasably maintain the pivot link (50) in a neutral position.

5. A vehicle according to claim 4 **characterized in that** said detent (40) is slideably attached to said chassis plate (35) through a slot and bolt arrangement (41, 44) allowing the detent (40) to be adjusted.

6. A vehicle according to claim 2 and any claim appended thereto **characterized in that** said damper (45) comprises an upper rod end (46) pivotally attached to a neutral adjust mount (65); said mount (65) being slideably attached to said chassis plate (35) through a slot and bolt arrangement (66, 68) allowing adjustment of the centering position of said damper (45).

7. A vehicle according to any of the preceding claims **characterized in that** said pedal (21) comprises a narrow, curved foot rest (23) with an elongated, transverse forward pad (22) and an opposingly mounted, elongated transverse rearward pad (24); said foot rest (23) comprising a pedal mount (31) connected to a pivotable pedal support bracket (60).

8. A vehicle according to claim 7 **characterized in that** the foot rest (23) and the forward pad (22) have a hollow region (29) provided therein creating a center of gravity (30) for the pedal (21) within the pedal mount (31).

9. A vehicle according to claims 7 or 8 **characterized in that** the width (27) of the elongated forward pad (22) and the width (28) of the elongated rearward pad (24) is greater than the width (26) of said footrest (23).

10. A vehicle according to any of the claims 7 to 9 **characterized in that** the elongated forward and rearward pads (22, 24) have a plurality of anti-slip threads (25).

11. A vehicle according to any of the claims 7 to 10 when appended directly or indirectly to claim 2 **characterized in that** a downward force exerted on the forward pad (22) results in the pivot link (50) rotating in a clock-wise direction whereby consequent movement of the adjustment rod (52) causes the tractor to move in a forward direction.

12. A vehicle according to any of the claims 7 to 11 when appended directly or indirectly to claim 2 **characterized in that** a downward force exerted on the rearward pad (24) results in the pivot link (50) rotating in a counter clock-wise direction whereby consequent movement of the adjustment rod (52) causes the tractor to move in a rearward direction.

13. A vehicle according to claim 4 and any claim appended thereto **characterized in that**, when no force is exerted on said pedal (21), the damper (45) rotates the pivot link (50) to a position wherein the V clip (42) engages the aperture (51) whereby the transmission adjustment rod (52) moves the transmission into a neutral condition.

14. A vehicle according to any of the preceding claims **characterized in that** the damper (45) is operable to reduce the speed with which the pedal (21) returns from an engaged position to said neutral position upon relief of a force on said pedal (21).

## Patentansprüche

1. Fahrzeug mit einem hydrostatischen Getriebe, das durch ein einziges Steuerpedal (21) gesteuert wird, um selektiv die Vorwärts- oder Rückwärts-Bewegung des Fahrzeugs zu wählen, wobei dem Pedal (21) eine Dämpfungseinrichtung (45) zum Dämpfen von Schwingungen, die von dem Fahrzeug auf das Pedal (21) übertragen werden, und ein Rastmechanismus (40, 51) zum lösbaren Halten des Pedals (21) in einer neutralen Stellung zugeordnet sind, wodurch das Fahrzeug unbeweglich gehalten wird, und **dadurch gekennzeichnet, daß** die Dämpfungseinrichtung (45) weiterhin eine Zentrierung des Pedals (21) in der neutralen Stellung bewirkt, wenn dieses nicht niedergedrückt ist.

2. Fahrzeug nach Anspruch 1, **dadurch gekennzeichnet, daß** das Pedal (21) schwenkbar an dem Fahrzeug-Fahrgestell angebracht ist und mit dem hydrostatischen Getriebe betriebsmäßig über ein Gestänge verbunden ist, wobei das Gestänge folgendes umfaßt:
- ein Schwenkgestänge (50), das schwenkbar an einer Fahrgestell-Platte (35) befestigt ist,
- eine Getriebeeinstellstange (52), die an einem Ende mit dem Schwenkgestänge (50) verbunden ist und am anderen Ende in ein Getriebegehäuse (17) eingesetzt ist, um die Richtung und Geschwindigkeit des Fahrzeugs zu steuern, und
- eine Kipphebelanordnung (55, 57), die betriebsmäßig das Pedal (21) mit dem Schwenkgestänge (50) verbindet.

3. Fahrzeug nach Anspruch 2, **dadurch gekennzeichnet, daß** die Dämpfungseinrichtung (45) zwischen der Fahrgestell-Platte (35) und dem Schwenkgestänge (50) angeordnet ist.

4. Fahrzeug nach den Ansprüchen 2 oder 3, **dadurch gekennzeichnet, daß** der Rastmechanismus (40, 51) eine Federstahl-Rasteinrichtung (40) einschließt, die an einem Ende mit der Fahrgestellplatte (35) verbunden ist und eine V-förmige Klammer (42) an ihrem anderen Ende aufweist, die mit einer Öffnung (51) in dem Schwenkgestänge (50) in Eingriff bringbar ist, um das Schwenkgestänge (50) in einer neutralen Stellung zu halten.

5. Fahrzeug nach Anspruch 4, **dadurch gekennzeichnet, daß** die Rasteinrichtung (40) verschiebbar an der Fahrgestellplatte (35) über eine Schlitz- und Schraubenanordnung (41, 44) befestigt ist, um eine Einstellung der Rasteinrichtung (40) zu ermöglichen.

6. Fahrzeug nach Anspruch 2 und irgendeinem der hierauf zurückbezogenen Ansprüche, **dadurch gekennzeichnet, daß** die Dämpfungseinrichtung (45) ein oberes Stangenende (46) aufweist, das schwenkbar an einer Neutralstellungs-Einstellbefestigung (65) befestigt ist, daß die Befestigung (65) verschiebbar an der Fahrgestellplatte (35) über eine Schlitz- und Schraubenanordnung (66, 68) angebracht ist, die eine Einstellung der Zentrierposition des Dämpfers (45) ermöglicht.

7. Fahrzeug nach einem der vorhergehenden Ansprüche, **dadurch gekennzeichnet, daß** das Pedal (21) eine schmale gekrümmte Fußstütze (23) mit einem langgestreckten, sich in Querrichtung erstreckenden Vorwärts-Auflagekissen (22) und einem entgegengesetzt befestigten langgestreckten, sich in Querrichtung erstreckenden Rückwärts-Auflagekissen (24) umfaßt, wobei die Fußstütze (23) eine Pedalbefestigung (31) aufweist, die mit einem schwenkbaren Pedal-Haltearm (60) verbunden ist.

8. Fahrzeug nach Anspruch 7, **dadurch gekennzeichnet, daß** die Fußstütze (23) und das Vorwärts-Auflagekissen (22) einen hohlen Bereich (29) aufweisen, der darin vorgesehen ist, um einen Schwerpunkt (30) für das Pedal (21) innerhalb der Pedalbefestigung (31) zu schaffen.

9. Fahrzeug nach Anspruch 7 oder 8, **dadurch gekennzeichnet, daß** die Breite (27) des langgestreckten vorderen Auflagekissens (22) und die Breite (28) des langgestreckten Rückwärts-Auflagekissens (24) größer als die Breite (26) der Fußstütze (23) ist.

10. Fahrzeug nach einem der Ansprüche 7 bis 9, **dadurch gekennzeichnet, daß** die langgestreckten Vorwärts- und Rückwärts-Auflagekissen (22, 24) eine Vielzahl von ein Rutschen verhindernden Noppen (25) aufweisen.

11. Fahrzeug nach einem der Ansprüche 7 bis 10, unter direkter oder indirekter Rückbeziehung auf Anspruch 2, **dadurch gekennzeichnet, daß** eine auf das Vorwärts-Auflagekissen (22) ausgeübte, nach unten gerichtete Kraft dazu führt, daß das Schwenkgestänge (50) in einer Uhrzeigersinn-Richtung gedreht wird, wobei die daraus folgende Bewegung der Einstellstange (52) eine Bewegung des Traktors in einer Vorwärts-Richtung hervorruft.

12. Fahrzeug nach einem der Ansprüche 7 bis 11, unter direkter oder indirekter Rückbeziehung auf Anspruch 2, **dadurch gekennzeichnet, daß** eine auf das Rückwärts-Auflagekissen (24) ausgeübte, nach unten gerichtete Kraft dazu führt, daß sich das Schwenkgestänge (50) in einer Gegen-Uhrzeigersinn-Richtung dreht, wodurch eine daraus folgende Bewegung der Einstellstange (52) eine Bewegung des Traktors in einer Rückwärtsrichtung hervorruft.

13. Fahrzeug nach Anspruch 4 und irgendeinem hierauf zurückbezogenen Anspruch, **dadurch gekennzeichnet, daß** wenn keine Kraft auf das Pedal (21) ausgeübt wird, die Dämpfungseinrichtung (45) das Schwenkgestänge (50) auf eine Position dreht, in der die V-förmige Klammer (42) mit der Öffnung (51) in Eingriff kommt, wodurch die Getriebe-Einstellstange (52) das Getriebe in einen neutralen Zustand bewegt.

14. Fahrzeug nach einem der vorhergehenden Ansprüche, **dadurch gekennzeichnet, daß** die Dämpfungseinrichtung (45) betreibbar ist, um die Geschwindigkeit zu verringern, mit der das Pedal (21) beim Aufheben einer Kraft auf das Pedal (21) von einer Einkuppelstellung auf die neutrale Stellung zurückkehrt.

## Revendications

1. Véhicule possédant une transmission hydrostatique contrôlée par une pédale unique de contrôle (21) afin de choisir sélectivement un déplacement en marche avant ou en marche arrière du véhicule; ladite pédale (21) possédant un amortisseur (45) lui étant associé pour amortir les vibrations transmises du véhicule vers la pédale (21), et un mécanisme de positionnement (40, 51) pour maintenir avec relâchement la pédale (21) dans une position neutre de sorte que le véhicule soit maintenu immobile; et
**caractérisé en ce que** la fonction dudit amortisseur (45) consiste en outre à centrer la pédale (21) dans ladite position neutre lorsqu'elle n'est pas enfoncée.

2. Véhicule selon la revendication 1, **caractérisé en ce que** ladite pédale (21) est attachée avec pivotement au châssis du véhicule et est reliée fonctionnellement à la transmission hydrostatique par l'intermédiaire d'une tringlerie; ladite tringlerie comprenant:
- une bielle (50) attachée avec pivotement à une plaque de châssis (35);
- une tige d'ajustement de transmission (52) reliée à une extrémité à ladite bielle (50) et insérée à l'autre extrémité dans un carter de transmission (17) afin de contrôler le sens de marche et la vitesse du véhicule; et
- un ensemble de leviers (55, 57) reliant fonctionnellement ladite pédale (21) avec ladite bielle (50).

3. Véhicule selon la revendication 2, **caractérisé en ce que** ledit amortisseur (45) est disposé entre ladite plaque de châssis (35) et ladite bielle (50).

4. Véhicule selon les revendications 2 ou 3, **caractérisé en ce que** ledit mécanisme de positionneur (40, 51) comprend un positionneur en acier à ressort (40) relié à une extrémité à ladite plaque de châssis (35) et possédant un dispositif de retenue en V (42) à son autre extrémité, pouvant s'engager dans une ouverture (51) prévue dans ladite bielle (50) pour maintenir avec dégagement la bielle (50) dans une position neutre.

5. Véhicule selon la revendication 4, **caractérisé en ce que** ledit positionneur (40) est attaché avec coulissement à ladite plaque de châssis (35) par l'intermédiaire d'un dispositif à boulon et boutonnière (41, 44) permettant un ajustement du positionneur (40).

6. Véhicule selon la revendication 2 et une quelconque revendication s'y rapportant, **caractérisé en ce que** ledit amortisseur (45) comprend une extrémité supérieure de tige (46) attachée avec pivotement à une monture d'ajustement de neutre (65); ladite monture (65) étant fixée avec coulissement à ladite plaque de châssis (35) au travers d'un dispositif à boulon et boutonnière (66, 68) permettant un ajustement de la position de centrage dudit amortisseur (45).

7. Véhicule selon l'une quelconque des revendications précédentes, **caractérisé en ce que** ladite pédale (21) comprend un repose-pied étroit et incurvé (23) muni d'un patin transversal avant allongé (22) et d'un patin transversal arrière allongé (24), monté à l'opposé; ledit repose-pied (23) comprenant une monture de pédale (31) reliée à un support pivotant de pédale (60).

8. Véhicule selon la revendication 7, **caractérisé en ce que** le repose-pied (23) et le patin avant (22) possèdent une zone évidée (29) en leur sein afin de créer un centre de gravité (30) de la pédale (21) à l'intérieur de la monture de pédale (31).

9. Véhicule selon la revendication 7 ou 8, **caractérisé en ce que** la largeur (27) du patin avant allongé (22) et la largeur (28) du patin arrière allongé (24) sont plus importantes que la largeur (26) dudit repose-pied (23).

10. Véhicule selon l'une quelconque des revendications 7 à 9, **caractérisé en ce que** les patins avant et arrière allongés (22, 24) possèdent une pluralité de pastilles antidérapantes (25).

11. Véhicule selon l'une quelconque des revendications 7 à 10 lorsqu'elles se rapportent directement ou indirectement de la revendication 2, **caractérisé en ce qu'**une force dirigée vers le bas et exercée sur le patin avant (22) provoque une rotation dans le sens des aiguilles d'une montre de la bielle (50) de telle sorte que le mouvement conséquent de la tige d'ajustement (52) entraîne le mouvement du tracteur en marche avant.

12. Véhicule selon l'une quelconque des revendications 7 à 11 lorsqu'elles se rapportent directement ou indirectement de la revendication 2, **caractérisé en ce qu'**une force dirigée vers le bas et exercée sur le patin arrière (24) provoque une rotation dans le sens inverse des aiguilles d'une montre de la bielle (50) de telle sorte que le mouvement conséquent de la tige d'ajustement (52) entraîne le mouvement du tracteur en marche arrière.

13. Véhicule selon la revendication 4 et une quelconque revendication s'y rapportant, **caractérisé en ce que**, lorsque aucune force n'est exercée sur ladite pédale (21), l'amortisseur (45) pivote la bielle (50) vers une position où le dispositif de retenue en V (42) s'engage dans l'ouverture (51) de telle sorte que la tige d'ajustement de transmission (52) déplace la transmission dans une situation neutre.

14. Véhicule selon l'une quelconque des revendications précédentes **caractérisé en ce que** la fonction de l'amortisseur (45) consiste à réduire la vitesse à laquelle la pédale (21) revient d'une position engagée vers ladite position neutre lors du relâchement d'une force sur ladite pédale (21).
